# EUROPÄISCHE PATENTSCHRIFT

(11) **EP 2 204 039 B1**
(45) Veröffentlichungstag und Bekanntmachung des Hinweises auf die Patenterteilung: **07.03.2018**
(21) Anmeldenummer: 08803925.0
(22) Anmeldetag: 10.09.2008
(51) Int. Cl.: H04M 11/06, H04M 7/00

(54) **VERFAHREN UND KOMMUNIKATIONS-ENDGERÄT ZUM AUSTAUSCH VON DATEN WÄHREND ODER NACH EINER KOMMUNIKATIONSVERBINDUNG**
METHOD AND COMMUNICATION TERMINAL DEVICE FOR EXCHANGING DATA DURING OR AFTER A COMMUNICATION CONNECTION
PROCÉDÉ ET TERMINAL DE COMMUNICATION POUR L'ÉCHANGE DE DONNÉES PENDANT OU APRÈS UNE COMMUNICATION

(30) Priorität: 28.09.2007 DE 102007046978
(43) Veröffentlichungstag der Anmeldung: 07.07.2010
(73) Patentinhaber: Unify GmbH & Co. KG, 80807 München (DE)
(72) Erfinder: JÄGER, Hubert, 82049 Pullach (DE); MONITZER, Arnold, 82049 Pullach im Isartal (DE); ZEINER, Johann, 85757 Karlsfeld (DE)
(74) Vertreter: Fritzsche, Thomas
(86) Internationale Anmeldenummer: PCT/EP2008/061958
(87) Internationale Veröffentlichungsnummer: WO 2009/043697

(56) Entgegenhaltungen:
- US-A1- 2006 023 852
- US-A1- 2007 121 830
- US-B1- 6 298 128

## Beschreibung

Verfahren und Kommunikations-Endgerät zum Austausch von Daten während oder nach einer Kommunikationsverbindung Die Erfindung betrifft ein Verfahren zum Austausch von Daten zwischen einem ersten und einem zweiten Kommunikations-Endgerät gemäß Patentanspruch 1, und ein Kommunikations-Endgerät zur Durchführung des Verfahrens gemäß Patentanspruch 14.
Zur Initiierung einer Gesprächsverbindung zwischen zwei Kommunikations-Endgeräten genügt im Fall der Telephonie die Kenntnis einer Rufnummer des zu erreichenden Kommunikations-Endgerätes (Telefons). Sofern das rufende Kommunikations-Endgerät zur Übermittlung seiner eigenen Rufnummer vor oder während der Verbindung eingerichtet ist (Clip-Funktion; Clip = Calling Line Identification Presentation), und sofern das gerufene Kommunikations-Endgerät zum Empfang und zur Darstellung dieser Rufnummer-Information eingerichtet ist, sind während bzw. nach der Kommunikationsverbindung beide Gesprächspartner lediglich in Kenntnis der Rufnummer des jeweils anderen Kommunikations-Endgerätes.
Oftmals ist jedoch die Kenntnis der vollständigen Kontaktdaten des jeweiligen Gesprächspartners gewünscht. Beispielsweise des vollständigen Namens, einer Postanschrift, einer E-Mai-Adresse etc.. Diese Daten übermitteln Gesprächspartner einander gewöhnlich auf akustischem Wege während einer Gesprächsverbindung, wobei dieses "Vorlesen" nicht nur zeitraubend ist, sondern auch fehleranfällig. Zudem müssen die Gesprächspartner die Ihnen mitgeteilten Informationen während des Gesprächs aufschreiben bzw. in eine Adress-Datenbank einpflegen, damit diese Informationen weiter genutzt werden können.
Sofern beide Gesprächspartner ein Mobiltelefon (GSM-Mobiltelefon) verwenden, besteht bei vielen dieser Geräte die Möglichkeit, einen Kontakt-Datensatz als elektronische Visitenkarte in das Mobiltelefon einzuspeichern. Sofern die Rufnummer des Mobiltelefons des Gesprächspartners bekannt ist, kann dann diese "elektronische Visitenkarte" nach dem Gesprächsende mittels einer SMS-Nachricht an das Mobiltelefon des Gesprächspartners übermittelt werden und dort in das elektronische Adressbuch des Mobiltelefons übernommen werden. Neben dem Nachteil, dass diese Vorgehensweise verlangt, dass entsprechend ausgestattete Mobiltelefone und -netze benutzt werden müssen, hat dieses Vorgehen weiter den Nachteil, dass die Übermittlung der Kontaktdaten erst nach Abschluss des Gesprächs vorgenommen werden kann, und dann überdies eine Anzahl manueller Eingaben an dem Mobiltelefon erfordert und außerdem das Versenden zumindest einer bzw. - im Fall des gegenseitigen Zusendens - zweier gemeinhin kostenpflichtiger SMS-Nachrichten bedingt.

Bei Sprachdatenendgeräten (VoIP = Voice over Internet Protocol) sind Netze und Protokolle bekannt, die das - teils automatische - Versenden einer elektronischen Visitenkarte zu dem Endgerät des jeweiligen Gesprächspartners unterstützen. Voraussetzung ist hier, dass es sich um eine "reine" VoIP-Verbindung handelt, welche nicht auf einer Teil-Übertragungsstrecke mittels einer anderen Technologie übertragen wird. Voraussetzung ist weiterhin, dass alle die an der Kommunikationsverbindung beteiligten Kommunikationsknoten das Protokoll zum Empfang und Weiterleiten der Adressinformation (elektronische Visitenkarte) unterstützen.

In US 6,298,128 B1 ist ein Verfahren zur Kommunikation von Nachrichten in verschiedenen Medien beschrieben. Eine erste Nachricht wird über ein erstes Kommunikationsmedium empfangen. Information über die erste Adresse, die dem ersten Kommunikationsmedium zugeordnet ist, wird aus dem ersten Kommunikationsmedium extrahiert. Eine zweite Adressinformation, die einem zweiten Kommunikationsmedium zugeordnet ist, wird automatisch als Antwort auf die erste Adressinformation festgestellt. Eine Antwort auf die erste Nachricht wird über das zweite Kommunikationsmedium mit der zweiten Adressinformation gesendet.

In US 2006/0023852 A1 ist ein Verfahren beschrieben, bei dem alphanumerische Daten über ein Telekommunikationsnetz während eines aktiven Anrufs "In-Band" versendet werden. In US 2007/0121830 A1 ist ein Verfahren für einen Informationsaustausch und eine Synchronisation beschrieben, bei dem eine Information von einem Format, z.B. ASCII formatierte Daten, in ein anderes Format, z.B. BCD formatierte Daten, umgewandelt und in ein oder mehrere Pakete verpackt wird. Die Daten in den Paketen werden von BCD- in DTMF-Signale konvertiert und über einen Telefonkommunikationskanal an einen Empfänger übermittelt, der die DTMF-Signale zu BCD rückkonvertiert um die in den Pakten enthaltenen Informationen zu erhalten.

Es ist also eine Aufgabe der vorliegenden Erfindung, ein Verfahren und ein Kommunikations-Endgerät zum Austausch von Daten, insbesondere Kontaktdaten, vorzuschlagen, wobei der Datenaustausch unabhängig von der zur Übermittlung der akustischen Gesprächsinformation verwendeten Übertragungs-Technologie gewährleistet ist.

Die Aufgabe wird durch ein Verfahren gemäß dem Patentanspruch 1 und durch ein Kommunikations-Endgerät gemäß dem Patentanspruch 14 gelöst.
Dabei wird ein Verfahren zum Austausch von Daten zwischen einem ersten und einem zweiten Kommunikations-Endgerät vorgeschlagen, wobei das erste und das zweite Kommunikations-Endgerät mit einem Datennetz verbunden sind. Dabei wird in einem ersten Schritt während einer Kommunikationsverbindung zwischen dem ersten und dem zweiten Kommunikations-Endgerät von dem ersten zu dem zweiten Kommunikations-Endgerät eine akustisch codierte Adressinformation übermittelt, und in einem zweiten Schritt werden von dem zweiten Kommunikations-Endgerät unter Nutzung der Adressinformation die Daten über das Datennetz zu dem ersten Kommunikations-Endgerät übermittelt.
Durch dieses Verfahren ist es möglich, über eine Standard-Telefonie-Infrastruktur Adressen, die für ein Datennetz, insbesondere für ein IP-Netzwerk (IP = Internet-Protocol), gültig sind, auszutauschen. Somit können beliebige Endgeräte, die akustisch miteinander kommunizieren (also Telefone jeglicher Technologie in Sprach-Netzwerken jeglicher Technologie), Daten und dabei insbesondere Adressdaten während oder nach einem Gespräch miteinander austauschen, sofern diese Endgeräte an dem Datennetz, bevorzugt an dem Internet, angeschlossen sind. Dabei braucht die Sprachverbindung selbst nicht über das Internet zu erfolgen, so dass das Verfahren auch in heterogenen Netzwerken und technologieübergreifend eingesetzt werden kann. Dadurch, dass lediglich die Adressinformation auf akustische Weise über den Sprachkanal ("In-Band") übertragen wird, wird die eigentliche Sprachübertragung nur kurz oder sogar überhaupt nicht gestört.
Zur Lösung der Aufgabe wird weiter ein Kommunikations-Endgerät zur Durchführung eines der vorstehend beschriebenen Verfahren vorgeschlagen, welches zur akustischen Übermittlung einer für ein Datennetzwerk gültigen Adresse (Adressinformation) mittels eines akustischen Kommunikationskanals eingerichtet ist, wobei die Adresse dem Kommunikations-Endgerät oder einer dem Kommunikations-Endgerät zugeordneten Datenbank zugeordnet ist.

Ein solches Kommunikations-Endgerät kann auch dann Daten, insbesondere Adressdaten, mit anderen Kommunikations-Endgeräten austauschen, wenn die zur Sprachübertragung verwendete Technologie bzw. die "Leitungen" (Bandbreite) dazu nicht geeignet sind. Dadurch, dass nur die Adressinformationen über den akustischen Sprachkanal ausgetauscht werden, wird die eigentliche Gesprächsverbindung nur minimal oder überhaupt nicht beeinträchtigt. Die Störungen werden weiter minimiert, indem der Großteil der Datenübertragung, nämlich die eigentlich zu übertragenden Daten, über das Datennetz und nicht über den Gesprächskanal übermittelt werden.

Vorteilhafte Ausgestaltungen des erfindungsgemäßen Verfahrens sind in den abhängigen Patentansprüchen 2 bis 15 angegeben. Die dabei beschriebenen Merkmale und Vorteile gelten sinngemäß auch für das erfindungsgemäße Kommunikations-Endgerät.

Ein insbesondere für Kommunikations-Endgeräte wichtiger Anwendungsfall wird abgedeckt, indem als die Daten eine elektronische Visitenkarte des zweiten Kommunikations-Endgerätes oder eines Benutzers des zweiten Kommunikations-Endgerätes verwendet wird. Dabei wird vorteilhaft das gebräuchlichste Datennetz überhaupt, nämlich das Internet, zur Übertragung der Daten, insbesondere der Adressdaten/Visitenkarten, verwendet. Das ist auch dann möglich, wenn die InternetVerbindung der Endgeräte schmalbandig ist, also zum Betrieb einer VoIP-Gesprächsverbindung nicht geeignet ist.

Eine gebräuchliche Technologie wird verwendet, wenn in dem ersten Schritt die Adressinformation als DTMF-Signale (DTMF = Dual Tone Multiple Frequency) codiert und übermittelt wird. Dies hat den Vorteil, dass die DTMF-Signale auch dann korrekt übermittelt werden, wenn einer Vielzahl von verschiedenen Übertragungs-Teilstrecken für die Gesprächsverbindung verwendet wird, denn DTMF-Signale werden in Netzknoten, die einen Übergang von analogen zu digitalen Leitungen darstellen, registriert und in digitale Daten/Befehle umgesetzt, und umgekehrt. Deshalb kann bei der Verwendung von DTMF-Signalen jegliche gebräuchliche Netz-Infrastruktur verwendet werden. Zur Minimierung der Störungen/Beeinträchtigungen können die hörbaren DTMF-Zeichen (DTMF-Signale) für die Verwendung des Verfahrens besonders kurz und dafür ggf. mehrfach hintereinander ausgesendet werden. Bei der Verwendung von rein digitalen Gesprächsverbindungen, beispielsweise im ISDN-Netz, können anstelle der DTMF-Signale auch andere Übertragungswege verwendet werden, z.B. die bekannten User-to-User-Informationselemente des ISDN. Alternativ sind auch andere Übertragungsformen, die auf Akustik basieren, verwendbar, beispielsweise die bei analogen Modems (Fax-Modems o.ä.) gebräuchliche Codierung (Modulierung).

Insbesondere bei der Verwendung des Internets als Datennetz bietet es sich an, als die Adressinformation eine E-Mail-Adresse des ersten Kommunikations-Endgerätes oder einer dem ersten Kommunikations-Endgerät zugeordneten Datenbank zu verwenden. Für den Fall, dass dem Kommunikations-Endgerät keine eigene E-Mail-Adresse zugeordnet werden kann, kann dabei ersatzweise auch eine (persönliche) E-Mail-Adresse des Benutzers des Kommunikations-Endgerätes verwendet werden.

Alternativ zu den E-Mail-Adressen kann als die Adressinformation eine global gültige Internetadresse (IP-Adresse/IP-Portnummer) des ersten Kommunikations-Endgerätes oder einer dem ersten Kommunikations-Endgerät zugeordneten Datenbank verwendet werden. Vorzugsweise wird eine feste IP-Portnummer für die Zwecke der Datenübertragung reserviert. In den Fällen, in denen das erste Kommunikations-Endgerät "hinter" einem NAT-fähigen Router betrieben wird, ist diesem Kommunikations-Endgerät in der Regel keine global gültige InternetAdresse zugewiesen. Dies gilt insbesondere für die Kommunikations-Endgeräte in großen Organisationen oder Unternehmen. In diesem Fall genügt es, die NAT-Tabelle des Routers mit einem entsprechenden Eintrag zu versehen, so dass die Daten an die global gültige IP-Adresse des Routers gesendet werden können, und von diesem an das lokal betriebene Kommunikations-Endgerät weitergeleitet werden. Es ist außerdem möglich, für große Firmen/Organisationen einen zentralen Adressdaten-Server vorzusehen, der die Daten für das Kommunikations-Endgerät empfängt, speichert und diesem zur Verfügung stellt, beispielsweise über eine Kontakte-Funktion in einem E-Mail-Programm.

Das Verfahren wird vorzugsweise bidirektional betrieben, d. h., dass sich die beteiligten Kommunikations-Endgeräte gegenseitig die Daten, insbesondere Adress-Informationen, zusenden. Dazu werden vorteilhaft in einem dritten Schritt durch das erste Kommunikations-Endgerät über das Datennetz weitere Daten an das zweite Kommunikations-Endgerät übermittelt. Die dazu notwendige Adressinformation des zweiten Kommunikations-Endgerätes kann entweder ebenfalls über den akustischen Kanal, beispielsweise mittels der beschriebenen DTMF-Signale, übertragen werden, oder aber den im zweiten Schritt übermittelten Daten (elektronische Visitenkarte o.ä.) entnommen werden. Vorteilhaft werden als die weiteren Daten eine elektronische Visitenkarte des ersten Kommunikations-Endgerätes oder eines Benutzers des ersten Kommunikations-Endgerätes verwendet.

Für die Zwecke des Datenschutzes ist es wichtig, wenn vor dem zweiten Schritt an dem ersten und/oder zweiten Kommunikations-Endgerät jeweils eine Abfrage ausgegeben wird, wobei durch einen Benutzer des ersten und/oder zweiten Kommunikations-Endgerätes der Übermittlung der Daten oder der Adressinformation zugestimmt wird und/oder die Übermittlung der Daten/Adressinformation initiiert wird.

Die Übermittlung der prinzipiell hörbaren DTMF-Signale oder der sonstigen akustischen Signale ist weniger oder überhaupt nicht störend, wenn in dem ersten Schritt während der Übermittlung der akustisch codierten Adressinformation ein die Übermittlung verschleierndes akustisches Signal an zumindest einem der Kommunikationsendgeräte ausgegeben wird. Dabei kann auch das erste Kommunikations-Endgerät mittels eines vorher vereinbarten DTMF-Zeichens bzw. Zeichenfolge die Ausgabe des verschleiernden Signals an dem zweiten Kommunikations-Endgerät initiieren. Ein solches verschleierndes Signal kann beispielsweise ein Rauschsignal oder eine Musik sein.

Je nach Voreinstellung kann der zweite Schritt während oder nach der Beendigung der Kommunikations-Verbindung durchgeführt werden. Letzterer Fall bietet sich für solche Kommunikations-Endgeräte an, die während der Zeit einer aktiven Gesprächsverbindung (Telefonat) nicht in der Lage sind, Daten über das Datennetz (z.B. Internet) auszutauschen. Vorteilhaft wird als Kommunikations-Endgerät ein Sprachdaten-Endgerät verwendet, welches ohnehin bereits an einem Datennetz (Internet) angeschlossen ist. Es können jedoch vorteilhaft auch Mobiltelefone als erste und/oder zweite Kommunikations-Endgeräte verwendet werden, wobei die Daten, insbesondere eine elektronische Visitenkarte, mittels einer SMS-Nachricht an das Mobiltelefon übermittelt wird. In diesem Fall wird als das Datennetz das GSM-Mobilfunknetz oder ein UMTS-Netz verwendet.

Es ist vorteilhaft, wenn verhindert wird, dass unbefugt Daten, insbesondere Adress-Datensätze, an Kommunikations-Endgeräte versendet und dort gespeichert werden. Dazu ist es zweckmäßig, wenn in dem ersten Schritt zusammen mit der akustisch codierten Adressinformation ein begrenzt gültiger Zugriffscode übermittelt wird, wobei dieser Zugriffscode von dem zweiten Kommunikations-Endgerät zusammen mit den Daten an das erste Kommunikations-Endgerät übermittelt wird. Dadurch ist gewährleistet, dass nur die während einer Gesprächsverbindung "autorisierten" Gesprächspartner bzw. deren Kommunikations-Endgeräte in der Lage sind, auf die Adressverzeichnisse/Datenspeicher des ersten Kommunikations-Endgerätes zuzugreifen.

Ausführungsbeispiele des erfindungsgemäßen Verfahrens werden nachfolgend anhand der Zeichnungen erläutert. Sie dienen gleichzeitig der Erläuterung eines erfindungsgemäßen Kommunikations-Endgerätes.

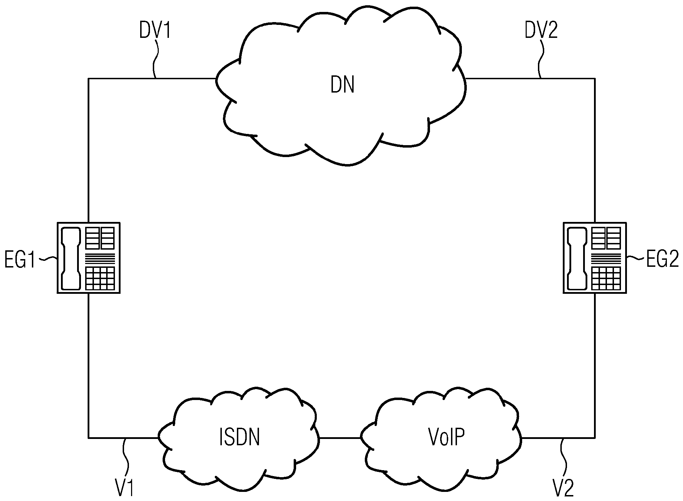

Dabei zeigt die einzige Figur in schematischer Darstellung zwei Kommunikations-Endgeräte, welche sowohl über ein Telefon-Netzwerk als auch über ein Datennetzwerk miteinander verbunden sind.

In der Figur sind als Kommunikations-Endgeräte die Telefone EG1, EG2 dargestellt, wobei hier exemplarisch das Telefon EG1 ein schurgebundenes Komfort-Telefon ist. Zur Kommunikation verwendet das Telefon EG1 einen ISDN-Anschluss, wozu es über die Verbindung V1 mit einem öffentlichen Kommunikationsnetzwerk ISDN verbunden ist. Zum Austausch von Adressdaten (elektronisches Telefonbuch, elektronische Visitenkarten o.ä.) verfügt das Telefon EG1 über einen Datenanschluss, in diesem Fall besteht dieser aus einem WLAN-Interface, über den das Telefon EG1 mittels einer Datenverbindung DV1 mit dem Datennetz (hier: Internet) verbunden ist. Das Telefon EG2 ist in diesem Ausführungsbeispiel ein sog. IP-Phone, also ein Voiceover-IP-fähiges Endgerät für Sprachdatenkommunikation. Über ein Daten-Interface (nicht dargestellt) betreibt das Telefon EG2 zwei Verbindungen, nämlich eine Verbindung V2 zur Abwicklung der Telefongespräche (Kommunikationsverbindungen), und eine Verbindung DV2 zum Austausch von Adressinformationen, elektronischen Visitenkarten o.ä. über das Datennetz DN (hier: Internet). Bei den Datenverbindungen V2, DV2 handelt es sich also um logische Verbindungen (Kanäle), die mittels desselben Transportmediums (z.B. WLAN oder Ethernet) Daten austauschen.

Die dargestellten Netze ISDN, VoIP sind hier exemplarisch für eine beliebige Kombination an unterschiedlichen "Transportwegen" für eine Sprach-Kommunikationsverbindung (Telefongespräch) dargestellt. Insbesondere können in der Realität auch in beliebiger Reihenfolge analoge Strecken bzw. Teilstrecken, Satellitenverbindungen usw. angeordnet sein. Für die Datenverbindungen DV1, DV2 und die dafür benutzten Transportwege gilt, dass diese nicht so breitbandig sein müssen, dass damit in synchroner Verbindung ein VoIP-Telefongespräch geführt werden könnte; es reicht hier auch eine schmalbandige Übertragung aus, die geeignet ist, in einer akzeptablen Zeit asynchron einige Adressinformationen oder andere auszutauschende Daten zu übertragen.

Im Folgenden wird exemplarisch der Ablauf einer Kommunikationsverbindung zwischen den Telefonen EG1, EG2 skizziert. Ein erster Benutzer ruft mit dem Telefon EG1 einen zweiten Benutzer mit dem Telefon EG2 an. Die Gesprächspartner vereinbaren, einander ihre vollständigen Kommunikationsdaten in Form elektronischer Visitenkarten zur Verfügung zu stellen. Diesen Vorgang startet der Benutzer des Telefons EG1 durch Eingabe eines entsprechenden Befehls, hier: Drücken eines entsprechend gekennzeichneten "Soft-Keys". Danach versendet das Telefon EG1 über die genutzte Sprechverbindung, also über die Verbindung V1, das ISDN-Netzwerk, das VoIP-Netzwerk und die Verbindung V2, eine kurze DTMF-Sequenz an das Telefon EG2, in diesem Fall die Zeichenfolge "9#". Dies hat zur Folge, dass beide Telefone EG1, EG2 über ihre Lautsprecher bzw. über die Hörkapseln ihrer Telefonhörer für einen festgelegten Zeitraum (hier: 3 Sekunden) eine Melodie ausgeben, die zur Kaschierung der Übertragung weiterer DTMF-Zeichen verwendet wird. Während dieser Zeit überträgt das Telefon EG1 in akustisch codierter Form, nämlich ebenfalls als DTMF-Zeichen, eine dem Telefon EG1 zugeordnete E-Mail-Adresse an das Telefon EG2. Da mittels DTMF-Codierung nur 16 Zustände unterschieden werden können, wird jedes alphanumerische Zeichen der E-Mail-Adresse mittels zweier aufeinander folgender DTMF-Zeichen übertragen. Selbstverständlich ist auch eine andere Codierung möglich. Insbesondere in den Fällen, in denen anstelle einer E-Mail-Adresse eine IP-Adresse bzw. IP-Portnummer verwendet wird, brauchen nur numerische Zeichen übertragen werden, so dass mittels eines jeden DTMF-Zeichens jeweils auch eine Ziffer der Internet-Adresse übermittelt werden kann. Es kann auch der Austausch ("Handshake") einer Pilot-Zeichenfolge vereinbart werden, womit die Codierung der nachfolgend zu übertragenden Zeichen zwischen den Telefonen EG1, EG2 vereinbart wird. Die Übertragungsdauer der einzelnen DTMF-Zeichen und die Zeitdauer der kaschierenden "Wartemusik" sind hier derart gewählt, dass zum einen die Übertragung der Adress-Informationen (E-Mail-Adresse o.ä.) akustisch kaschiert wird, andererseits die Unterbrechung bzw. Beeinträchtigung der Sprechverbindung möglichst kurz ausfällt. Der zuvor beschriebene Adressenaustausch über den akustischen Kanal wird auch als "virtual handshaking" bezeichnet.

Anhand der empfangenen E-Mail-Adresse versendet nun das Telefon EG2 über die Datenverbindung DV2, das Datennetz DN (Internet) und die Datenverbindung DV1 eine E-Mail-Nachricht mit "seiner" elektronischen Visitenkarte (bzw. den Adressinformationen des Benutzers des Telefons EG2) an das Telefon EG1, wo diese E-Mail-Nachricht automatisch geöffnet wird und der Inhalt (die elektronische Visitenkarte) in das Adressverzeichnis des Telefons EG1 übernommen wird, oder anderweitig weiterverarbeitet wird. Anhand der darin enthaltenen Adressinformationen (unter anderem der E-Mail-Adresse des Telefons EG2) versendet nun das Telefon EG1 seinerseits derartige Daten (hier: elektronische Visitenkarte des Benutzers des Telefons EG1) an das Telefon EG2. Alternativ kann die E-Mail-Adresse des Telefons EG2 auch analog zu der E-Mail-Adresse des Telefons EG1 über die Sprechverbindung mittels der DTMF-Codierung oder einer sonstigen In-Band-Übertragung übertragen werden.

Optional können die Telefone EG1, EG2 mit der akustisch codierten Adressinformation auch spezielle Zugriffscodes einander zusenden, die nur einmalig gültig sind und/oder auch nur für eine begrenzte Zeitdauer, beispielsweise 20 Sekunden. Die Telefone EG1, EG2 fügen diesen jeweils vom anderen Telefon EG1, EG2 empfangenen Zugriffscode in die E-Mail-Nachricht mit den zu versendenden Adressinformationen/elektronischen Visitenkarten ein, vorzugsweise in die Betreffzeile ("Subject"). Somit kann sichergestellt werden, dass nur solche E-Mail-Nachrichten mit Adressinformationen automatisch übernommen werden, die aus einer entsprechend "autorisierten" Gesprächsverbindung hervor gegangen sind, bzw. durch in einer solchen angefordert worden.

In alternativen Ausführungsformen sind die Adressdatenbanken (elektronische Rufnummernspeicher, Adressspeicher o.ä.) nicht in den Telefonen EG1, EG2 selbst integriert, sondern als zentrale Datenbankapplikation, beispielsweise in einem Intranet, vorgesehen. In diesem Fall werden als akustisch codierte Adressinformationen nicht die E-Mail-Adressen der Telefone EG1, EG2 verwendet, sondern entsprechende Zugänge ("Ports") dieser zentralen Applikationen. Dabei kann beispielsweise der begrenzt gültige und mit den Daten übertragende "Zugriffscode" zur Identifizierung desjenigen Endgerätes bzw. Teilnehmers verwendet werden, für den die übertragenen Daten bestimmt sind. Als weiteres "Sicherheitsmerkmal" können an den Telefonen EG1, EG2 auch Abfragemeldungen ausgegeben werden, mit denen der Empfang der Daten und/oder das Versenden der Daten freigegeben bzw. verhindert werden kann.

Neben der hier gezeigten Möglichkeit, die Daten (elektronische Visitenkarten o.ä.) während der Gesprächsverbindung auszutauschen, kann insbesondere in den Fällen, in denen eine Internetverbindung der beteiligten Telefone EG1, EG2 nicht immer gegeben ist, ein entsprechender Austausch der Daten auch nach Beendigung der Gesprächsverbindung erfolgen. Insbesondere bei der Verwendung von Mobiltelefonen, die in einigen Fällen überhaupt keine Verbindung zum Internet haben (beispielsweise beim Roaming in fremden Netzen), kann als akustisch codierte Adressinformation auch eine Rufnummer verwendet werden, verknüpft mit der Aufforderung, die entsprechenden Daten (z.B. elektronische Visitenkarte) mittels einer SMS-Nachricht an diese Rufnummer zu übermitteln. Dabei sind selbstverständlich auch Mischformen nutzbar, so dass in der einen Richtung eine E-Mail-Nachricht verwendet wird, in der anderen Richtung jedoch eine SMS-Nachricht o.ä.. Schließlich kann anstelle von DTMF-Zeichen auch eine andere akustische Codierung verwendet werden, beispielsweise in Form der bei Daten-Modems und Fax-Modems gebräuchlichen Modulierung. Entscheidend ist, dass mittels des verwendeten Verfahrens eine kurze Zeichenfolge, nämlich eine Adressinformation, "In-Band" innerhalb des Sprachkanals an das jeweils andere Kommunikations-Endgerät übermittelt werden kann.

Anstelle einer elektronischen Visitenkarte können selbstverständlich auch beliebige andere Daten, beispielsweise ein Bild des Gesprächspartners, Textdateien, elektronische Dokumente o.ä. über die Datenverbindung(en) DV1, DV2, DN übermittelt werden.

## Patentansprüche

1. Verfahren zum Austausch von Daten zwischen einem ersten und einem zweiten Kommunikations-Endgerät (EG1, EG2),
a) wobei das erste (EG1) und das zweite Kommunikations-Endgerät (EG2) sowohl über ein Sprach-Kommunikations-Netzwerk (ISDN, VoIP) mittels einer Sprach-Kommunikationsverbindung (V1, V2) als auch über ein Datennetz (DN) mittels einer Datenverbindung (DV1, DV2), die sich zumindest logisch von der Sprach-Kommunikationsverbindung (V1, V2) unterscheidet, miteinander verbunden sind, wobei
b) in einem ersten Schritt während einer Sprach-Kommunikationsverbindung zwischen dem ersten und dem zweiten Kommunikations-Endgerät (EG1, EG2) von dem ersten zu dem zweiten Kommunikations-Endgerät (EG2) eine in dem ersten Kommunikations-Endgerät (EG1) hinterlegte, akustisch codierte Adressinformation zu einer für das Datennetz (DN) gültigen Adresse über die Sprach-Kommunikationsverbindung übermittelt wird,
wobei in dem ersten Schritt zusammen mit der akustisch codierten Adressinformation ein begrenzt gültiger Zugriffscode übermittelt wird,
und
c) in einem zweiten Schritt von dem zweiten Kommunikations-Endgerät (EG2) unter Nutzung der Adressinformation die Daten über das Datennetz (DN) zu dem ersten Kommunikations-Endgerät (EG1) an die für das Datennetz (DN) gültige Adresse übermittelt werden, wobei der Zugriffscode von dem zweiten Kommunikations-Endgerät (EG2) zusammen mit den Daten an das erste Kommunikations-Endgerät (EG1) übermittelt wird.

2. Verfahren nach Patentanspruch 1,
**dadurch gekennzeichnet, dass**
als die Daten eine elektronische Visitenkarte des zweiten Kommunikations-Endgerätes (EG2) oder eines Benutzers des zweiten Kommunikations-Endgerätes (EG2) verwendet wird.

3. Verfahren nach einem der vorhergehenden Patentansprüche,
**dadurch gekennzeichnet, dass**
als das Datennetz (DN) das Internet verwendet wird.

4. Verfahren nach einem der vorhergehenden Patentansprüche,
**dadurch gekennzeichnet, dass**
in dem ersten Schritt die Adressinformation als DTMF-Signale codiert und übermittelt wird.

5. Verfahren nach einem der vorhergehenden Patentansprüche,
**dadurch gekennzeichnet, dass**
als die Adressinformation eine Adresse verwendet wird, die dem ersten Kommunikations-Endgerät (EG1) oder einer dem ersten Kommunikations-Endgerät (EG1) zugeordneten Datenbank zugeordnet ist.

6. Verfahren nach Patentanspruch 5,
**dadurch gekennzeichnet, dass**
als die Adressinformation eine E-Mail-Adresse oder eine global gültige Internetadresse verwendet wird.

7. Verfahren nach einem der vorhergehenden Patentansprüche,
**dadurch gekennzeichnet, dass**
in einem dritten Schritt durch das erste Kommunikations-Endgerät (EG1) über das Datennetz (DN) weitere Daten an das zweite Kommunikations-Endgerät (EG2) übermittelt werden.

8. Verfahren nach Patentanspruch 7,
**dadurch gekennzeichnet, dass**
als die weiteren Daten eine elektronische Visitenkarte des ersten Kommunikations-Endgerätes (EG1) oder eines Benutzers des ersten Kommunikations-Endgerätes (EG1) verwendet wird.

9. Verfahren nach einem der vorhergehenden Patentansprüche,
**dadurch gekennzeichnet, dass**
vor dem zweiten Schritt an dem ersten und/oder zweiten Kommunikations-Endgerät (EG1, EG2) jeweils eine Abfrage ausgegeben wird, wobei durch einen Benutzer des ersten und/oder zweiten Kommunikations-Endgerätes (E1, EG2) der Übermittlung der Daten zugestimmt wird und/oder die Übermittlung der Daten initiiert wird.

10. Verfahren nach einem der vorhergehenden Patentansprüche,
**dadurch gekennzeichnet, dass**
in dem ersten Schritt während der Übermittlung der akustisch codierten Adressinformationen ein die Übermittlung verschleierndes akustisches Signal an zumindest einem der Kommunikations-Endgeräte (EG1, EG2) ausgegeben wird.

11. Verfahren nach einem der vorhergehenden Patentansprüche,
**dadurch gekennzeichnet, dass**
der zweite Schritt während der Sprach-Kommunikations-verbindung (V1, V2) oder nach Beendigung der Sprach-Kommunikationsverbindung (V1, V2) durchgeführt wird.

12. Verfahren nach einem der vorhergehenden Patentansprüche,
**dadurch gekennzeichnet, dass**
als das erste und/oder als das zweite Kommunikations-Endgerät (EG1, EG2) ein Sprachdaten-Endgerät verwendet wird.

13. Verfahren nach einem der vorhergehenden Patentansprüche,
**dadurch gekennzeichnet, dass**
als das erste und/oder als das zweite Kommunikations-Endgerät (EG1, EG2) ein Mobiltelefon verwendet wird, wobei die Daten mittels einer SMS-Nachricht an das Mobiltelefon übermittelt werden.

14. Anordnung zum Austausch von Daten zwischen einem ersten und einem zweiten Kommunikations-Endgerät (EG1, EG2),
a) wobei das erste (EG1) und das zweite Kommunikations-Endgerät (EG2) sowohl über ein Sprach-Kommunikations-Netzwerk (ISDN, VoIP) mittels einer Sprach-Kommunikationsverbindung (V1, V2) als auch über ein Datennetz (DN) mittels einer Datenverbindung (DV1, DV2), die sich zumindest logisch von der Sprach-Kommunikationsverbindung (V1, V2) unterscheidet, miteinander verbunden sind,
wobei die Anordnung die folgenden Mittel umfasst:
b) erste Mittel zum Übermitteln einer in dem ersten Kommunikations-Endgerät (EG1) hinterlegten, akustisch codierten Adressinformation zu einer für das Datennetz (DN) gültigen Adresse über die Sprach-Kommunikationsverbindung von dem ersten zu dem zweiten Kommunikations-Endgerät (EG2) während einer Sprach-Kommunikationsverbindung zwischen dem ersten und dem zweiten Kommunikations-Endgerät (EG1, EG2), wobei die ersten Mittel weiterhin angepasst sind, um zusammen mit der akustisch codierten Adressinformation einen begrenzt gültigen Zugriffscode zu übermitteln, und
c) zweite Mittel zum Übermitteln der Daten von dem zweiten Kommunikations-Endgerät (EG2) unter Nutzung der Adressinformation über das Datennetz (DN) zu dem ersten Kommunikations-Endgerät (EG1) an die für das Datennetz (DN) gültige Adresse, wobei die zweiten Mittel angepasst sind, um den Zugriffscode von dem zweiten Kommunikations-Endgerät (EG2) zusammen mit den Daten an das erste Kommunikations-Endgerät (EG1) zu übermitteln.

## Claims

1. A method for exchanging data between a first and a second communication terminal (EG1, EG2),
a) wherein the first (EG1) and the second communication terminal (EG2) are connected to one another both via a voice communication network (ISDN, VoIP) by means of a voice communication connection (V1, V2) and also via a data network (DN) by means of a data connection (DV1, DV2) which differs at least logically from the voice communication connection (V1, V2), wherein
b) in a first step, during a voice communication connection between the first and the second communication terminal (EG1, EG2), acoustically coded address information regarding a valid address for the data network (DN) and stored in the first communication terminal (EG1) is transmitted from the first to the second communication terminal (EG2) via the voice communication connection, wherein in the first step, together with the acoustically coded address information, an access code of limited validity is transmitted,
and
c) in a second step, using the address information, the data is transmitted from the second communication terminal (EG2) via the data network (DN) to the first communication terminal (EG1) to the valid address for the data network (DN), wherein the access code, together with the data, is transmitted from the second communication terminal (EG2) to the first communication terminal (EG1).

2. The method according to Claim 1,
**characterized in that**,
as data, an electronic calling card of the second communication terminal (EG2) or of a user of the second communication terminal (EG2) is used.

3. The method according to either of the preceding claims,
**characterized in that**,
as data network (DN), the Internet is used.

4. The method according to any one of the preceding claims,
**characterized in that**,
in the first step, the address information is coded and transmitted as DTMF signals.

5. The method according to any one of the preceding claims,
**characterized in that**,
as address information, an address which is associated with the first communication terminal (EG1) or with a data base associated with the first communication terminal (EG1) is used.

6. The method according to Claim 5,
**characterized in that**,
as address information, an email address or a globally valid Internet address is used.

7. The method according to any one of the preceding claims,
**characterized in that**,
in a third step, additional data is transmitted to the second communication terminal (EG2) by the first communication terminal (EG1) via the data network (DN).

8. The method according to Claim 7,
**characterized in that**,
as additional data, an electronic calling card of the first communication terminal (EG1) or of a user of the first communication terminal (EG1) is used.

9. The method according to any one of the preceding claims,
**characterized in that**,
before the second step, a query is output respectively on the first and/or second communication terminal (EG1, EG2), wherein the transmission of the data is approved and/or the transmission of the data is initiated by a user of the first and/or second communication terminal (EG1, EG2).

10. The method according to any one of the preceding claims,
**characterized in that**,
in the first step, during the transmission of the acoustically coded address information, an acoustic signal masking the transmission is output on at least one of the communication terminals (EG1, EG2).

11. The method according to any one of the preceding claims,
**characterized in that**
the second step is carried out during the voice communication connection (V1, V2) or after the termination of the voice communication connection (V1, V2).

12. The method according to any one of the preceding claims,
**characterized in that**,
as the first and/or as the second communication terminal (EG1, EG2), a voice data terminal is used.

13. The method according to any one of the preceding claims,
**characterized in that**,
as the first and/or as the second communication terminal (EG1, EG2), a mobile telephone is used, wherein the data is transmitted by means of an SMS message to the mobile telephone.

14. An arrangement for exchanging data between a first and a second communication terminal (EG1, EG2),
a) wherein the first (EG1) and the second communication terminal (EG2) are connected to one another both via a voice communication network (ISDN, VoIP) by means of a voice communication connection (V1, V2) and also via a data network (DN) by means of a data connection (DV1, DV2) which differs at least logically from the voice communication connection (V1, V2),
wherein the arrangement comprises the following means:
b) first means for transmitting acoustically coded address information regarding a valid address for the data network (DN) and stored in the first communication terminal (EG1), via the voice communication connection from the first to the second communication terminal (EG2) during a voice communication connection between the first and the second communication terminal (EG1, EG2), wherein the first means are moreover adapted so as to transmit, together with the acoustically coded address information, an access code of limited validity, and
c) second means for transmitting the data, using the address information, from the second communication terminal (EG2) via the data network (DN) to the first communication terminal (EG1) to the valid address for the data network (DN), wherein the second means are adapted so as to transmit the access code from the second communication terminal (EG2) together with the data to the first communication terminal (EG1).

## Revendications

1. Procédé pour l'échange de données entre un premier et un second terminal de communication (EG1, EG2),
a) dans lequel le premier (EG1) et le second terminal de communication (EG2) sont reliés entre eux aussi bien par le biais d'un réseau de communications vocales (RNIS, VoIP) au moyen d'une liaison de communications vocales (V1, V2) que par le biais d'un réseau de données (DN) au moyen d'une liaison de données (DV1, DV2) qui se différencie au moins logiquement de la liaison de communications vocales (V1, V2), dans lequel
b) dans une première étape durant une liaison de communications vocales entre le premier et le second terminal de communication (EG1, EG2), du premier au second terminal de communication (EG2) est transmise une information d'adresse, déposée dans le premier terminal de communication (EG1), codée acoustiquement, à une adresse valide pour le réseau de données (DN) par le biais de la liaison de communications vocales, dans lequel, dans la première étape, est transmis, conjointement avec l'information d'adresse codée acoustiquement, un code d'accès à validité limitée,
et
c) dans une deuxième étape, les données sont transmises par le second terminal de communication (EG2) à l'aide de l'information d'adresse par le biais du réseau de données (DN) au premier terminal de communication (EG1) à l'adresse valide pour le réseau de données (DN), dans lequel le code d'accès est transmis conjointement avec les données au premier terminal de communication (EG1) par le second terminal de communication (EG2).

2. Procédé selon la revendication 1,
**caractérisé en ce que**
les données employées sont une carte de visite électronique du second terminal de communication (EG2) ou d'un utilisateur du second terminal de communication (EG2).

3. Procédé selon l'une quelconque des revendications précédentes,
**caractérisé en ce que**
le réseau de données (DN) employé est l'Internet.

4. Procédé selon l'une quelconque des revendications précédentes,
**caractérisé en ce que**,
dans la première étape, l'information d'adresse est codée et transmise sous forme de signaux DTMF.

5. Procédé selon l'une quelconque des revendications précédentes,
**caractérisé en ce que**
l'information d'adresse employée est une adresse qui est attribuée au premier terminal de communication (EG1) ou à une banque de données attribuée au premier terminal de communication (EG1).

6. Procédé selon la revendication 5,
**caractérisé en ce que**
l'information d'adresse employée est une adresse de courrier électronique ou une adresse Internet mondialement valide.

7. Procédé selon l'une quelconque des revendications précédentes,
**caractérisé en ce que**,
dans une troisième étape, d'autres données sont transmises au second terminal de communication (EG2) par le premier terminal de communication (EG1) par le biais du réseau de données (DN).

8. Procédé selon la revendication 7,
**caractérisé en ce que**
les autres données employées sont une carte de visite électronique du premier terminal de communication (EG1) ou d'un utilisateur du premier terminal de communication (EG1).

9. Procédé selon l'une quelconque des revendications précédentes,
**caractérisé en ce que**,
avant la deuxième étape, une question est émise respectivement au premier et/ou au second terminal de communication (EG1, EG2), dans lequel la transmission des données est approuvée et/ou la transmission est lancée par un utilisateur du premier et/ou du second terminal de communication (EG1, EG2).

10. Procédé selon l'une quelconque des revendications précédentes,
**caractérisé en ce que**,
dans la première étape durant la transmission des informations d'adresse codées acoustiquement, un signal acoustique dissimulant la transmission est émise à au moins un des terminaux de communication (EG1, EG2).

11. Procédé selon l'une quelconque des revendications précédentes,
**caractérisé en ce que**
la deuxième étape est exécutée durant la liaison de communications vocales (V1, V2) ou après la fin de la liaison de communications vocales (V1, V2).

12. Procédé selon l'une quelconque des revendications précédentes,
**caractérisé en ce que**
le premier et/ou le second terminal de communication (EG1, EG2) employé sont/est un terminal de données vocales.

13. Procédé selon l'une quelconque des revendications précédentes,
**caractérisé en ce que**
le premier et/ou le second terminal de communication (EG1, EG2) employé sont/est un téléphone mobile, dans lequel les données sont transmises au téléphone mobile au moyen d'un message SMS.

14. Système d'échange de données entre un premier et un second terminal de communication (EG1, EG2),
a) dans lequel le premier (EG1) et le second terminal de communication (EG2) sont reliés entre eux aussi bien par le biais d'un réseau de communications vocales (RNIS, VoIP) au moyen d'une liaison de communications vocales (V1, V2) que par le biais d'un réseau de données (DN) au moyen d'une liaison de données (DV1, DV2) qui se différencie au moins logiquement de la liaison de communications vocales (V1, V2),
dans lequel le système comporte les moyens suivants :
b) des premiers moyens pour la transmission d'une information d'adresse, déposée dans le premier terminal de communication (EG1), codée acoustiquement, à une adresse valide dans le réseau de données (DN) par le biais de la liaison de communications vocales du premier au second terminal de communication (EG2) durant une liaison de communications vocales entre le premier et le second terminal de communication (EG1, EG2), dans lequel les premiers moyens sont en outre adaptés pour transmettre conjointement avec l'information d'adresse codée acoustiquement un code d'accès à validité limitée, et
c) des seconds moyens pour la transmission des données par le second terminal de communication (EG2) à l'aide de l'information d'adresse par le biais du réseau de données (DN) au premier terminal de communication (EG1) à l'adresse valide pour le réseau de données (DN), dans lequel les seconds moyens sont adaptés pour transmettre le code d'accès par le second terminal de communication (EG2) conjointement avec les données au premier terminal de communication (EG1).
